# EUROPÄISCHE PATENTSCHRIFT

(11) **EP 2 903 921 B1**
(45) Veröffentlichungstag und Bekanntmachung des Hinweises auf die Patenterteilung: **12.04.2017**
(21) Anmeldenummer: 13744508.6
(22) Anmeldetag: 30.07.2013
(51) Int. Cl.: B65G 69/28

(54) **LADEBRÜCKENANORDNUNG UND VERFAHREN ZUM EINRICHTEN UND BETREIBEN DERSELBEN**
LOADING RAMP ARRANGEMENT AND METHOD FOR SETTING IT UP AND OPERATING IT
PONT DE CHARGEMENT ET SON PROCÉDÉ D'INSTALLATION ET DE FONCTIONNEMENT

(30) Priorität: 01.10.2012 DE 102012109318; 26.10.2012 DE 102012110292
(43) Veröffentlichungstag der Anmeldung: 12.08.2015
(73) Patentinhaber: Hörmann KG Antriebstechnik, 33803 Steinhagen (DE)
(72) Erfinder: STROET, Frank J., NL-1704 Heerhugowaard (NL); ROBBEN, Michael, 33829 Borgholzhausen (DE); SOSNA, Karsten, 33829 Borgholzhausen (DE); SANKE, Michael, 33378 Rheda-Wiedenbrück (DE)
(74) Vertreter: Kastel, Stefan
(86) Internationale Anmeldenummer: PCT/EP2013/065976
(87) Internationale Veröffentlichungsnummer: WO 2014/053258

(56) Entgegenhaltungen:
- EP-A1- 1 099 653
- DE-U1- 7 918 512

## Beschreibung

Die Erfindung betrifft ein Verfahren zum Einrichten und Betreiben einer Ladebrückenanordnung. Weiter betrifft die Erfindung eine Ladebrückenanordnung zur Verwendung in einem solchen Verfahren sowie eine Verladestelle mit einer solchen Ladenbrückenanordnung.
Ladebrücken werden an Verladestationen zum Beladen und Entladen von Fahrzeugen oder Containern oder dergleichen vorgesehen, wobei Laderampen insbesondere dazu dienen, eine Rampe oder dergleichen Verladestelle an unterschiedliche Ladeflächen höhenverschiedener Fahrzeuge oder sonstiger Transportbehälter anpassen zu können. In der Regel kommen hierzu als Ladebrücken einfache Hubbrücken ohne Längenanpassung oder Vorschubbrücken oder Klappkeilbrücken zum Einsatz.

Eine Klappkeilbrücke und ein gattungsgemässes Verfahren zum Betreiben derselben sind beispielsweise aus der DE 79 18 512 U1 bekannt.
Ein Überblick über unterschiedliche Ladebrücken, damit verwendete Tore, mögliche Techniken zum Aufbau von Verladestationen mit mehreren Verladestellen und Verfahren zum Einrichten und Betreiben von Ladebrückenanordnungen hierfür sind aus der Unternehmensbroschüre "Verladetechnik - Komplettlösungen für mehr Effizienz" der Hörmann KG Verkaufsgesellschaft mit Druckdatum 08.2011 bekannt.

Aus der DE 91 02 364 U1 ist es bekannt, ein Ruhezustandssignal, das bei Auflage der Ladebrücke auf einem Auflager erzeugt wird, dazu zu nutzen, elektrische Elemente der Überfahrbrücke, wie z.B. Magnetventile, zu steuern und abzuschalten, um die Lebensdauer dieser Elemente zu erhöhen.

Aus der EP 0 884 477 A2 ist eine Ladenbrückensteuerung unter Verwendung von Energiespeichern bekannt.

Aus der US 2005/0028723 A1 ist es bekannt, die Steuerung der Ladebrücke an eine Torsteuerung zu koppeln.

Aus der DE 10 2010 011 325 A1 ist ein Verfahren zum Betrieb einer Ladebrücke bekannt, bei dem ein Abschalten einer ersten Gruppe von elektrischen Einheiten einschließlich des Rampenantriebes erfolgt, wobei eine zweite Gruppe von elektrischen Einheiten, die einen Teil der Ein- oder Ausgabeelemente umfasst, betriebsbereit bleibt.

Bei auf dem Markt erhältlichen Ladebrücken - siehe die oben genannte Broschüre der Hörmann KG Verkaufsgesellschaft - werden zum Antreiben von Ladebrücken hydraulische Antriebe verwendet. Zum Anheben und Senken der Ladebrücken werden im vorgenannten Stand der Technik Hubzylinder eingesetzt, die in der Regel über Steuerventile angesteuert werden. Der Hydraulikdruck wird von einer Druckquelle in Form einer Hydraulikpumpe mit elektrischem Motor geliefert. Zum Heben und Senken werden Steuerventile geschaltet, die das Hydraulikmedium zum Hydraulikzylinder leiten oder davon ableiten. Eine gängige Art von Steuerventilen sind die Magnetventile. Bei diesen Steuerventilen erfolgt eine Öffnung des Ventils in der Regel durch Bestromen eines Solenoids oder einer sonstigen Spule, um ein Magnetfeld zu erzeugen, welches einen Stößel des Ventils öffnet. Um das Magnetventil offen zu halten, ist in der Regel die Aufrechterhaltung des Magnetfeldes notwendig. Daher haben die geöffneten Magnetventile in der Regel einen hohen Stromverbrauch.

Es ist daher grundsätzlich bereits bekannt - DE 10 2010 011 325 A1 und insbesondere DE 91 02 364 U1 -, die Magnetventile im Ruhezustand der Brücke auszuschalten.
Bei der aus der DE 91 02 364 U1 bekannten Klappkeilbrücke ruht im Ruhezustand der Klappkeil am vorderen freien Ende der Ladebrücke auf einem Auflager und stützt somit die Ladebrücke auch dann, wenn der Hydraulikantrieb durch Abschalten der Magnetventile nicht wirksam ist. Diese Möglichkeit der Abstützung schränkt die Freiheiten der Konstruktion, Konfiguration und des Betriebs der Ladebrücke erheblich ein.
Aufgabe der Erfindung ist es, Ladebrückenanordnungen zu ermöglichen, die große Freiheiten in Konstruktion und Konfiguration bieten und weitaus ressourcenschonender als die bisher vorgeschlagenen Lösungen sind.
Zum Lösen dieser Aufgabe wird ein Verfahren nach Anspruch 1 vorgeschlagen. Eine Ladebrückenanordnung zur Verwendung in einem solchen Verfahren ist in den Nebenansprüchen angegeben.
Vorteilhafte Ausgestaltungen der Erfindung sind Gegenstand der Unteransprüche. Ein erster Aspekt der Erfindung schafft ein Verfahren zum Einrichten und Betreiben einer Ladebrückenanordnung, die wenigstens eine Ladebrücke an einer Verladestation, wenigstens einen Hubzylinder, eine Druckquelle und ein Steuerventil für den Hubzylinder zum Anheben der Ladebrücke und eine Ladebrückensteuerung zum Ansteuern des Steuerventils aufweist,
wobei zum Einrichten der Ladebrückenanordnung beurteilt wird, ob an der Verladestation ein Querlastverkehr mit einer Belastung oberhalb eines Belastungsschwellwerts über die Ladebrücke möglich ist oder nicht,
wobei die Ladebrückensteuerung
a) im Fall, dass ein solcher Querlastverkehr mit Belastungen oberhalb des Belastungsschwellwerts möglich ist, derart eingerichtet wird, dass das Steuerventil in einem Ladezustand und in einem Ruhezustand der Ladebrücke zum Halten und/oder Bewegen der Ladebrücke angeschaltet offen gehalten wird, und
b) im Fall, dass ein solcher Querlastverkehr nicht möglich ist, d.h. entweder kein Querlastverkehr möglich ist oder nur Querlastverkehr unterhalb des Belastungsschwellwerts denkbar ist, zum wahlweisen Ausführen eines Energiesparmodus, in dem das Steuerventil stromlos geschlossen wird, und eines Halte- und Betriebsmodus eingerichtet wird, in dem das Steuerventil zum Anheben oder Halten der Ladebrücke über den Hubzylinder bestromt geöffnet ist,
wobei im Betrieb im Fall b) wenigstens ein Parameter erfasst wird, der einen Ruhezustand oder einen Ladezustand anzeigt und abhängig davon im Ruhezustand der Energiesparmodus und im Ladezustand der Halte- und Betriebsmodus angesteuert wird.

Was bei einer Möglichkeit eines Querlastverkehrs mit Belastungen genau auf Niveau des Belastungsschwellwerts passiert, kann offen gelassen werden, da dies einerseits unwahrscheinlich ist und andererseits wahlweise nach Möglichkeit a) oder b) verfahren werden kann.

Es ist bevorzugt, dass als Parameter, der einen Ruhezustand oder einen Ladezustand anzeigt, eine Stellung, insbesondere eine Endstellung, eines der Ladebrücke zugeordneten Tores der Verladestation erfasst wird.

Es ist bevorzugt, dass ein Umschalten vom Energiesparmodus in den Halte- und Betriebsmodus erfolgt, wenn erfasst wird, dass sich das Tor in einer Öffnungsendlage befindet.

Es ist bevorzugt, dass ein Umschalten vom Halte- und Betriebsmodus in den Energiesparmodus erfolgt, wenn erfasst wird,
c) dass sich das Tor nicht in der Öffnungsendlage befindet oder die Öffnungsendlage verlässt oder
d) dass sich das Tor in der Schließendlage befindet oder diese erreicht.

Es ist bevorzugt, dass der Belastungsschwellwert für die Entscheidung, ob ein Energiesparmodus erlaubt ist oder nicht, abhängig von der maximal zulässigen Belastung der sich in Ruhestellung befindlichen Ladebrücke ausgewählt wird.

Gemäß eines weiteren Aspekts schafft die Erfindung eine Ladebrückenanordnung zur Verwendung in einem der oben genannten Verfahren mit wenigstens einer Ladebrücke, wenigstens einem Hubzylinder zum Anheben der Ladebrücke, wenigstens einem Steuerventil und einer Druckquelle zum Antreiben des Hubzylinders und einer Ladebrückensteuerung. Die Ladebrückensteuerung ist zur Ansteuerung des wenigstens einen Steuerventils für den Hubzylinder der Ladebrücke ausgebildet, wobei die Ladebrückensteuerung dazu ausgebildet ist, das wenigstens eine Steuerventil wahlweise in einem Energiesparmodus stromlos geschlossen zu halten oder in einem Halte- und Betriebsmodus bestromt geöffnet zu halten, und wobei die Ladebrückensteuerung eine Energiesparmodus-Sperreinrichtung zum generellen Verhindern eines Einschaltens des Energiesparmodus beim Einrichten der Ladebrückenanordnung aufweist.

Die Ladebrückensteuerung kann derart ausgebildet sein, dass eine Torposition eines zugeordneten Tores mit berücksichtigt wird. Vorzugsweise ist dies speziell mittels einer Torpositionssteuerungseinstelleinrichtung einstellbar, also z.B. über einen Schalter wie z.B. DIP-Schalter oder über eine Menü-Einstellung oder sonstige Einstelleinrichtungen.

Gemäß eines weiteren Aspekts schafft die Erfindung eine Verladestelle mit einer solchen Ladebrückenanordnung, wobei die Ladebrückensteuerung derart ausgebildet oder eingerichtet ist, dass bei einer Ladebrücke, bei der Querlastverkehr mit Belastungen oberhalb einer vorgegebenen Belastungsschwelle nicht möglich und/oder vorgesehen ist, in einer Ruhestellung der Ladebrücke der Energiesparmodus anwählbar ist und bei einer Ladebrücke, bei der Querlastverkehr mit einer Belastung oberhalb einer vorgegebenen Belastungsschwelle möglich und/oder vorgesehen ist, kein Energiesparmodus anwählbar ist.

Bei bisher auf dem Markt erhältlichen Ladebrücken - siehe z.B. die vorgenannte Broschüre der Hörmann KG Verkaufsgesellschaft "Verladetechnik", Druckdatum 08.2012 - werden die Ventile der Hydraulikzylinder der Ladebrücke in der Regel auch in der Ruhestellung der Ladebrücke bestromt und somit offen gehalten, damit die Ladebrücke oder die Hydraulikzylinder bzw. Ventilblöcke bei einem möglichen Querverkehr nicht beschädigt werden. Es gibt insbesondere Verladestationen mit innenliegenden Ladebrücken, die in der Ruhestellung auf dem gleichen Niveau wie der Hallenboden liegen. Derartige Ladebrücken können von Gabelstaplern oder sonstigen Flurförderfahrzeugen oder dergleichen sowohl in Längsrichtung zum Beladen als auch in Querrichtung überfahren werden. Bei einem Beladevorgang werden die Ladebrücken durch den mit den Magnetventilen angesteuerten Hydraulikzylinder gestützt und schwimmend gehalten. Werden in einem Ruhezustand die Ventile geschlossen, sind die Hydraulikzylinder starr blockiert. Wird nun Ladegut innerhalb z.B. einer Versandhalle transportiert, wobei die Laderampe quer zur LKW-Verladerichtung überfahren wird, kann es je nach Gewicht des Querverkehrs zu Beschädigungen kommen.

Zum Beispiel können folgende Beschädigungen auftreten, wenn sich die Ladebrückenfläche bei hohen Transportgewichten im elastischen Bereich bis zu einigen Millimetern verformt:
- In den Hydraulikzylindern baut sich durch die Verformung ein sehr großer Druck auf, der die Hydraulikzylinder oder angeschlossene Ventilblöcke beschädigt;
- die Anbindung der Zylinder an die Verladebrücke kann sich durch ein Blech der Ladefläche - z.B. ein hier üblicherweise verwendetes Tränenblech - drücken, so dass plastische Verformungen entstehen.

Technisch lösen kann man diese beiden Probleme mit größeren Hydraulikzylindern oder mit einer Verwendung einer steiferen, stabileren Konstruktion.

Diese zuvor aufgeführten Lösungen führen aber zwangsläufig zu höheren Materialkosten.

Nun gibt es aber häufig Verladestationen, bei denen es gar keinen Querverkehr gibt oder geben kann. Zum Beispiel gibt es Anordnungen von Ladebrücken in Vorsatzschleusen vor einer Halle, so dass nur Verkehr über die Ladebrücke in Beladerichtung möglich ist.

Gemäß einem bevorzugten Ausführungsbeispiel der Erfindung wird nun vorgeschlagen, dass Verladestationen - z.B. Verladezentren -, in denen kein Querverkehr oder nur ein Querverkehr mit geringen Transportgewichten zu erwarten ist, auf Energiesparmodus programmiert werden. Bei solchen Laderampen - eventuell ist es ja nur eine von ganz vielen in einem Verladezentrum -, bei denen mit Querverkehr und hohen Transportgewichten zu rechnen ist, wird eine Ladesteuerung derart eingerichtet, dass die Ventile auch in der Ruhestellung der Ladebrücke geöffnet bleiben. Somit kann ein bei hoher Belastung durch Querverkehr oder dergleichen auftretender Druck über die geöffneten Ventile abgeleitet werden; die Ladebrücke ist schwimmend abgestützt.

Der Belastungsschwellwert für den zu erwarteten Querverkehr, ab dem ein Ermöglichen des Energiesparmodus zugelassen wird oder nicht, kann je nach Bauart und Konstruktion der Ladebrücke variieren. Da die maximal zulässige Belastung je nach Größe der Ladebrücke variieren kann, werden vorzugsweise in der Dokumentation der Ladebrücke Angaben zum maximal zulässigen Gewicht im Falle eines Querverkehrs gemacht.

Bei einem besonders bevorzugten Ausführungsbeispiel der Erfindung bekommt eine Ladebrückensteuerung die Möglichkeit, die Ventile für Hydraulikzylinder in der Ruhestellung der Ladebrücke wahlweise stromlos zu schalten oder bestromt zu lassen. Diese Möglichkeit kann z.B. über eine Menüeinstellung, über einen Wahlschalter - z.B. einfacher DIL-Schalter ON/OFF - oder über eine sonstige durch Montagepersonal bei der Einrichtung der Ladebrückensteuerung einfach bedienbare Eingabeschnittstelle realisiert werden.

In einem Energiesparmodus werden die Ventile in der Ruhestellung der Ladebrücke geschlossen. Hierdurch ergibt sich kein Standby-Verbrauch der Hydraulikventile. Dies kann insbesondere bei Magnetventilen eine hohe Energieeinsparung bringen.

In einem Halte- und Betriebsmodus der Ventile bleiben die Ventile geöffnet. Hierdurch ergibt sich insbesondere bei Magnetventilen ein hoher Standby-Verbrauch; andererseits können bei Belastungen auf die Ladebrücke Drücke im Hydraulikzylinder über die geöffneten Ventile abgeleitet und abgefangen werden, so dass auch Verformungen im elastischen Bereich aufgefangen werden können, ohne dass dies zu Beschädigungen der Ladebrücke führt. Insbesondere können die Ladebrücken in diesem Halte- und Betriebsmodus schwimmend gehalten werden. Hierdurch können auch bei Ladebrücken, bei denen ein Querverkehr mit höheren Belastungen zu erwarten ist, Ladebrücken mit kleineren Hydraulikzylindern oder einer weniger stabilen, leichtgewichtigeren Konstruktion eingesetzt werden. Dennoch lässt sich der Energieverbrauch einer Verladestation optimieren, da nur dort, wo Querverkehr auftreten kann, die Ventile zum Abfangen von Belastungen geöffnet bleiben.

Vorzugsweise ist das Stromlos-Schalten (Energiesparmodus) nur parallel zu einer Endlagenmeldung eines der Ladebrücke zugeordneten Tores möglich. Bei einer bevorzugten Ausgestaltung der Erfindung gibt es dann z.B. die folgenden Möglichkeiten:
1. Die Ladebrückensteuerung kann nur die Endlage "TOR AUF" - die Öffnungsendlage - verarbeiten und eine Endlagenmeldung "TOR AUF" liegt an. In diesem Fall bleiben oder werden die Ventile geöffnet; und dies auch dann, wenn sich die Ladebrücke in der Ruhestellung befindet. In diesem Fall geht man davon aus, dass eine Be- oder Entladung eines LKW oder dergleichen stattfinden kann.
2. Die Ladebrückensteuerung kann nur die Endlage "TOR AUF" verarbeiten, und es liegt keine Endlagenmeldung "TOR AUF" an. In diesem Fall bleiben bzw. werden die Ventile geschlossen. In diesem Fall kann man die Ladebrücke ohnehin nicht verfahren, da bei vielen Verladestellen-Management-Steuerungen das Tor und die zugeordnete Ladebrücke gegeneinander verriegelt sind und die Ladebrücke nur dann bedienbar ist, wenn die Endlagenmeldung "TOR AUF" anliegt.
3. Die Ladebrückensteuerung kann auch die Endlage "TOR ZU" verarbeiten und eine Endlagenmeldung "TOR ZU" liegt an. In diesem Fall bleiben bzw. werden die Ventile geschlossen.

Nun besteht manchmal bei einem voll beladenen LKW keine Möglichkeit, eine Lippe der Ladebrücke auf der Ladefläche des LKW abzulegen, so dass die gesamte Last beim entsprechenden Ladevorgang zunächst durch die Ladebrücke selbst getragen werden muss. Somit können oftmals die erste Palette beim Ausladen und die letzte Palette beim Einladen nur in der Ruhestellung der Ladebrücke und nicht in der Schwimmstellung der Ladebrücke durchgeführt werden. Um auch diesen Fall abdecken zu können, ist bei einer besonders bevorzugten Ausgestaltung der Erfindung vorgesehen, dass zusätzlich die Position des Tores abgefragt wird und bei einem geöffneten Tor das Schließen der Ventile seitens der Software auch bei einer Energiespareinstellung der Ladebrücke unterbunden wird. Bei zuvor bekannten Ladebrücken mit Energiesparmodus werden die Ventile der Hubzylinder in der Ruhestellung der Ladebrücke generell stromlos geschaltet und somit generell geschlossen. Untersuchungen an derartigen Ladebrücken haben jedoch die zuvor erläuterten Probleme bei hohen Belastungen, insbesondere in Folge von Querverkehr mit hohen Transportgewichten, ergeben.

Mit dem erfindungsgemäßen Verfahren und den Vorrichtungen zur Durchführung desselben lässt sich jedoch im Standard eine gleichbleibende kostengünstige Konstruktion der Ladebrücke erreichen, da ein Querverkehr mit hohen Lasten selten vorkommt bzw. gefordert wird. Bei denjenigen Ladebrücken, wo doch ein Querverkehr vorkommen kann, kann dies über das Abschalten der Möglichkeit des Energiesparmodus oder durch ein sonstiges Sperren des Energiesparmodus abgefangen werden. Nur dann, wenn der Betreiber der Verladestation sowohl Energiesparen im Standby und zusätzlich einen möglichen Querverkehr mit hohen Lasten fordert, würden die konstruktiv aufwändigeren und somit teureren Ladebrücken mit stärkeren Zylindern bzw. einer steiferen Ladebrückenkonstruktion angeboten und installiert werden.

Somit lässt sich insgesamt durch die Anwendung des erfindungsgemäßen Verfahrens oder dessen bevorzugter Ausgestaltungen eine Herstellung und Installation von Ladebrücken in industrieller Großserie ermöglichen, bei der rein durch Steuerungsmaßnahmen nicht unerhebliche Materialkosten und konstruktiver Aufwand - einschließlich der Kosten für den Transport der schwereren Ladebrücken und der schwierigeren Montage - eingespart werden können.

Vorzugsweise wird durch die Erfindung eine Ladebrückensteuerung mit programmierbarer Energiesparfunktion geschaffen.

Die Energiesparfunktion kann an die Torsteuerung gekoppelt werden, um so abhängig von der Torstellung anzuwählen oder auszuschalten.

Bei einigen Verladerampen mit Steuerungen gibt es auch Sensoren, über die man eine Rückmeldung zur Ladebrückenposition bekommt. Zum Beispiel gibt es einen ersten Initiator und einen zweiten Initiator, wobei der erste Initiator bei einer Klappkeilbrücke meldet, wenn ein Keil eingeklappt ist, oder bei einer Vorschubladebrücke meldet, wenn die Vorschublippe eingefahren ist, und wobei ein zweiter Initiator meldet, wenn die Ladebrückenplatte in Ruheposition ist.

In diesem Falle, in dem man eine Rückmeldung über die Position der Ladebrücke zur Verfügung hat, kann man auch die tatsächliche Ruheposition der Ladebrücke mit in die Energiesparfunktion einbinden. Das Einschalten oder Abschalten der Energiesparfunktion lässt sich über die Signale dieser Positionssensoren ansteuern. Ohne derartige Sensoren könnte man beispielsweise das Einschalten des Energiesparmodus auch an einen Rückholbefehl für die Ladebrücke koppeln.

Zum Beispiel würde man nach Bestätigung einer Autoreturn-Taste, die ein Einfahren der Ladebrücke in die Ruheposition einleitet, den Energiesparmodus nach einer Sicherheitspufferzeit einschalten. Aufgrund der unterschiedlichen Konstellation wie z.B. Viskosität von Hydrauliköl oder dergleichen lässt sich nicht immer genau voraussagen, wann nach Betätigen der Autoreturn-Taste die Ladebrücke tatsächlich in der Ruheposition eingefahren ist. Bei Sensoren, die die Ruheposition erfassen, wäre eine solche Sicherheitspufferzeit entbehrlich.

Ausführungsbeispiele der Erfindung werden nachfolgend anhand der beigefügten Zeichnungen näher erläutert. Darin zeigt:
- Fig. 1: eine perspektivische Darstellung einer Verladestelle mit einer innen in einem Gebäude angebrachten Ladebrücke, hier in Form einer Klappkeilbrücke;
- Fig. 2: eine perspektivische Explosionsdarstellung der Einzelteile der Klappkeilladebrücke von Fig. 1;
- Fig. 3: ein schematisches Blockschaltbild einer Hydrauliksteuerung für eine Klappkeilladebrücke der in den Fig. 1 und 2 gezeigten Art mit einer angedeuteten Ladebrückensteuerung;
- Fig. 4: eine schematische perspektivische Darstellung einer Verladestelle mit einer innen im Gebäude angeordneten Ladebrücke in Form einer Vorschubladebrücke;
- Fig. 5: eine perspektivische Explosionsdarstellung der Einzelteile eines Ausführungsbeispiels einer Vorschubladebrücke;
- Fig. 6: ein Blockschaltbild eines Hydraulikschaltkreises für eine Vorschubladebrücke der in Fig. 5 gezeigten Art;
- Fig. 7: eine schematische perspektivische Darstellung einer Verladestelle mit einer Ladebrücke in einer Vorsatzschleuse vor einem Gebäude;
- Fig. 8: eine schematische perspektivische Darstellung einer Verladestation mit mehreren Verladestellen, wobei Vorsatzschleusen der in Fig. 7 gezeigten Art und im Inneren angeordnete Ladebrücken der in Fig. 1 oder Fig. 4 gezeigten Art zum Einsatz kommen;
- Fig. 9: eine schematische perspektivische Darstellung einer Verladestelle mit Tor, Steuerung und Ladebrücke;
- Fig. 10: ein Flussdiagramm zum Einrichten einer Ladebrückenanordnung; und
- Fig. 11: ein Flussdiagramm zum anschließenden Betrieb einer Ladebrückenanordnung.

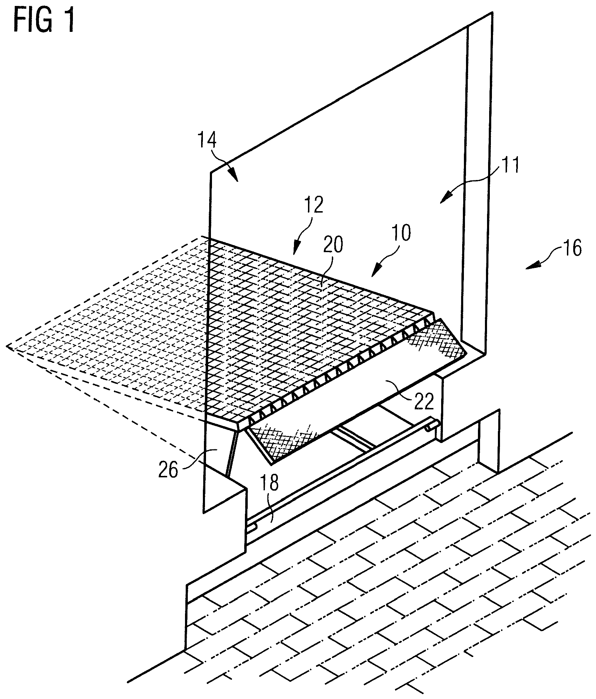

In Fig. 1 ist eine erste Ausführungsform einer Ladebrückenanordnung 11 mit einer Ladebrücke 10, ausgebildet als Klappkeilladebrücke 12, an einer Verladestelle 14 gezeigt, die Teil einer Verladestation 16 ist.

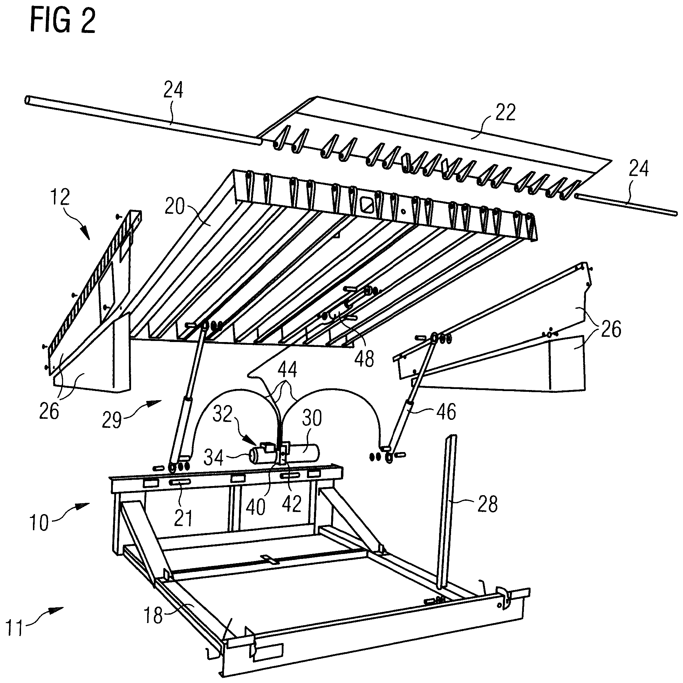

In Fig. 2 ist ein Ausführungsbeispiel für die Klappkeilladebrücke 12 mit einer beispielhaften Anordnung von Einzelteilen dargestellt.

Wie in Fig. 2 dargestellt, weist die Klappkeilladebrücke 12 einen Basisrahmen 18 auf, an dem eine Plattform 20 mit ihrem hinteren Ende um horizontale Scharnierachsen 21 schwenkbar angelenkt ist. Am vorderen Ende der beispielsweise mit einem Tränenblech versehenen Plattform 20 ist ein Klappkeil 22 um horizontal angeordnete Klappkeilscharnierachsen 24 schwenkbar gelagert. Links und rechts der Plattform 20 sind Fußschutzplatten 26 angebracht. Im hochgeschwenkten Zustand kann die Plattform 20 mit einer Reparaturstütze 28 abgestützt werden.

Die hier in Rede stehenden Ladebrücken 10 sind beispielsweise mit einer Elektrohydraulikeinrichtung 29 zum Anheben und Senken der Plattform 20 durch Schwenken um die Scharnierachse 21 antreibbar. Bei der in der Fig. 2 dargestellten Ausführungsform ist die Elektrohydraulikeinrichtung 29 außerdem zum Aufklappen und Zuklappen des Klappkeils 22 um die Klappkeilscharnierachse 24 ausgebildet.

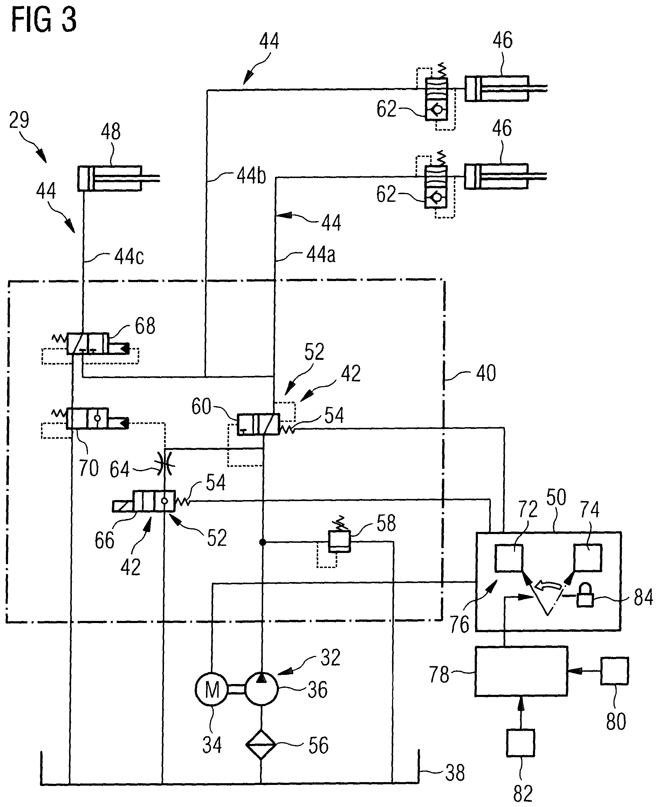

Die in Fig. 2 und 3 dargestellte Ausführungsform der Elektrohydraulikeinrichtung 29 weist eine elektrohydraulische Einheit 30 mit einer Druckquelle für Hubzylinder 46 und Klappkeilzylinder 48 auf. Die Druckquelle 32 ist z.B. durch eine mit einem Elektromotor 34 angetriebene Pumpe 36 gebildet, die Hydrauliköl aus einem Hydrauliköltank 38 unter Druck setzt und über einen Ventilblock 40 mit Steuerventilen 42 und Schläuchen 44 das Druckmedium zu den Zylindern 46, 48 leitet.

Ein Hydraulikschaltplan für die Elektrohydraulikeinrichtung 29 mit einer angedeuteten Ladebrückensteuerung 50 ist in Fig. 3 wiedergegeben. In Fig. 3 ist die Druckquelle 32 mit dem Elektromotor 34 und der Pumpe 36 über dem Hydrauliköltank 38 wiedergegeben. In dem Ventilblock 40 finden sich die Steuerventile 42, die als Magnetventil 52 mit Magnetspule 54 ausgebildet sind und über die Ladebrückensteuerung 50 mit Strom versorgt werden. Die Pumpe 36 saugt Hydrauliköl aus dem Hydrauliktank 38 über einen Saugfilter 56 an. Auf der Druckseite der Pumpe wird der Druck durch ein Druckbegrenzungsventil 58 begrenzt. Das Druckbegrenzungsventil 58 ist z.B. auf einen Druckbegrenzungswert von ca. 120 bar eingestellt. Als Steuerventil 42 zum Ansteuern der Hubzylinder ist ein Freeflowventil 60 vorgesehen, das als Magnetventil 52 mit Magnetspule 54 ausgebildet ist. Wird die Magnetspule 54 durch die Ladebrückensteuerung 50 bestromt, öffnet das Magnetventil 52, so dass Hydraulikdruck auf die Schläuche 44a und 44b für die Hubzylinder 46 geliefert wird, um so die Hubzylinder 46 zum Anheben der Plattform 20 zu betätigen. Diese Schläuche 44a, 44b sind über Schlauchbruchsicherungen 62 an die Hubzylinder 46 angeschlossen.

Das Freeflowventil 60 ist derart geschaltet, dass es bei Nichtbestromen seiner Magnetspule 54 die Hubzylinder 46 von der Druckquelle 32 trennt und über ein Drosselventil 64 an ein weiteres Steuerventil 42 in Form eines elektrischen 2/2-Ventils 66 zum elektrischen Senken anschließt. Das elektrische 2/2-Ventil 66 ist ebenfalls als Magnetventil 52 mit Magnetspule 54 ausgebildet. Wird die Magnetspule 54 des 2/2-Ventils 66 bestromt, öffnet das elektrische 2/2-Ventil 66 und lässt Hydraulikmedium aus den Schläuchen 44a, 44b in den Hydrauliköltank 38 ab.

Der Druck am druckseitigen Ausgang des Freeflowventils 60 ist außerdem über ein hydraulisch betätigtes Wechselventil 68 an einen Schlauch 44c für den Klappkeilzylinder angeschlossen.

Wenn die Hubzylinder 46 ihre obere Endlage erreicht haben, erhöht sich durch den Anschlag der Druck auf den Schläuchen 44a, 44b der Hubzylinder 46. Diese Druckerhöhung schaltet das Wechselventil 68, um so den Klappkeilzylinder 48 über den Schlauch 44c mit Hydrauliköl zu versorgen. Hierdurch fährt der Klappkeil 22 dann aus, wenn sich die Plattform 20 in der oberen Endlage befindet. Das Zurückfahren des Klappkeilzylinders 48 erfolgt über das Wechselventil 68 und ein hydraulisches 2/2-Ventil 70, das durch den Druck vor dem Drosselventil 64 gesteuert wird. Werden somit die Hubzylinder 46 gesenkt, dann wird auch der Klappkeilzylinder 48 zurückgefahren.

Die Magnetspulen 54 der als Steuerventile 42 wirkenden Ventile 60, 66 ziehen im geöffneten Zustand relativ viel Strom. Um Energie einzusparen, weist die Ladebrückensteuerung 50 eine Halte- und Betriebsmoduseinrichtung 72 zum Durchführen eines Halte- und Betriebsmodus auf, in dem die jeweiligen Magnetspulen 54 der Steuerventile 52 entsprechend bestromt werden. In diesem Modus können die Hubzylinder 46 bewegt, z.B. angehoben, werden oder schwimmend gehalten werden.

Weiter weist die Ladebrückensteuerung 50 eine Energiesparmoduseinrichtung 74 zum Durchführen eines Energiesparmodus auf, in dem die Magnetspulen 54 der Steuerventile 42 von der Stromversorgung getrennt werden und die Steuerventile 42 geschlossen werden. Zum wahlweisen Anwählen des Halte- und Betriebsmodus und des Energiesparmodus weist die Ladebrückensteuerung 50 weiter eine Modusauswahleinrichtung 76 auf, die signalgesteuert automatisch den durch die Halte- und Betriebsmoduseinrichtung 72 durchgeführten Halte- und Betriebsmodus stoppt und den durch die Energiesparmoduseinrichtung 74 durchgeführten Energiesparmodus anwählt bzw. umgekehrt wieder zurück den Halte- und Betriebsmodus auswählt. Die Modusauswahleinrichtung 76 arbeitet abhängig von der Erfassung eines Ruhezustandes der zugeordneten Ladebrücke 10. Hierzu ist die Modusauswahleinrichtung 76 an eine Ruhezustandserfassungseinrichtung 78 angeschlossen.

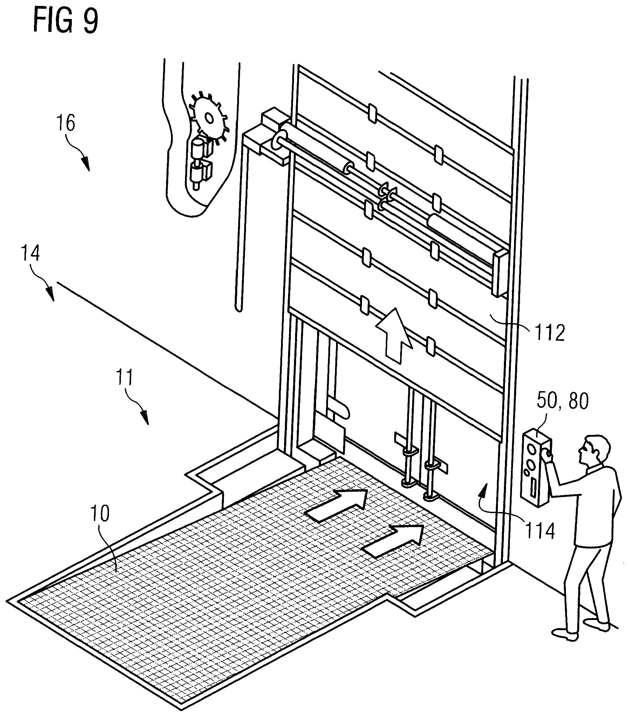

Die Ruhezustandserfassungseinrichtung 78 ist in einer Ausführungsform ausschließlich an eine Torsteuerung 80 zum Steuern eines an der Verladestelle 14 vorhandenen Tores 112 zum Verschließen der Verladeöffnung 114 (siehe z.B. Fig. 9) angeschlossen. Wird eine Endlage des Tores 112 durch die Torsteuerung 80 erfasst, dann kann daraus auf einen Ruhezustand geschlossen werden. Darauf wird hiernach noch näher eingegangen.

Alternativ oder zusätzlich ist die Ruhezustandserfassungseinrichtung 78 an wenigstens einen Ruhezustandssensor 82 angeschlossen, dies kann z.B. ein Schalter oder dergleichen sein, der feststellt, wenn sich die Ladebrücke 10 in ihrem Ruhezustand befindet.

Gemäß Fig. 3, auf die nun wiederum Bezug genommen wird, weist die Ladebrückensteuerung 50 weiter eine Modusauswahlsperreinrichtung 84 auf, die einen Betrieb der Modusauswahleinrichtung 76 derart sperrt, dass ein Wechsel von der Halte- und Betriebsmoduseinrichtung 72 auf die Energiesparmoduseinrichtung 74 verhindert wird. Es wird somit durch die Modusauswahlsperreinrichtung 84 verhindert, dass bei Erfassung des Ruhezustandes der Energiesparmodus durchgeführt wird. Mit anderen Worten sind im aktiven Zustand der Modusauswahlsperreinrichtung 84 die Steuerventile 52 im gesamten Betrieb der Ladebrücke 10 oder im gesamten Betrieb der Verladestation 16 entsprechend bestromt.

Die Einrichtungen 72, 74, 76, 78, 84 können durch Hardware oder durch Software zur Durchführung in einer Rechnereinheit der Ladebrückensteuerung 50 implementiert sein.

Insbesondere kann die Modusauswahlsperreinrichtung 84 in einem Menüpunkt bei der Einrichtung der Ladebrückensteuerung 50 aktiviert werden; alternativ ist ein Schalter als Modusauswahlsperreinrichtung 84 vorgesehen.

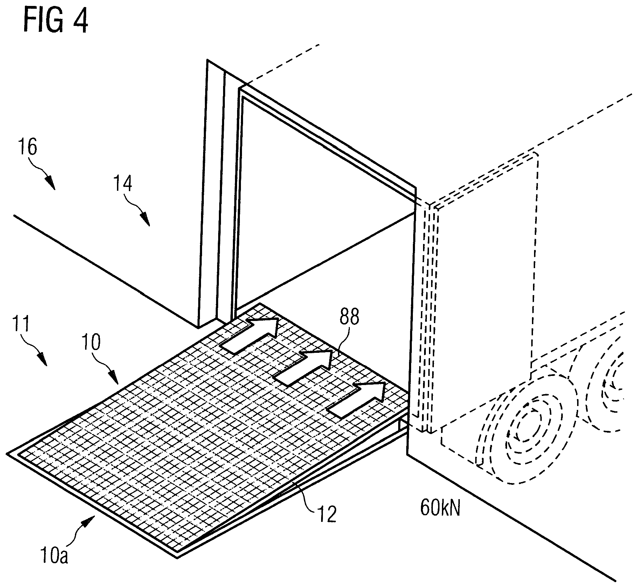

Fig. 4 zeigt ein weiteres Ausführungsbeispiel einer Ladebrückenanordnung 11 mit einer Ladebrücke 10, wobei die Ladebrücke 10 in diesem Ausführungsbeispiel als Vorschubladebrücke 86 ausgebildet ist, die im Inneren eines Gebäudes an einer Verladestelle 14 einer Verladestation 16 angeordnet ist.

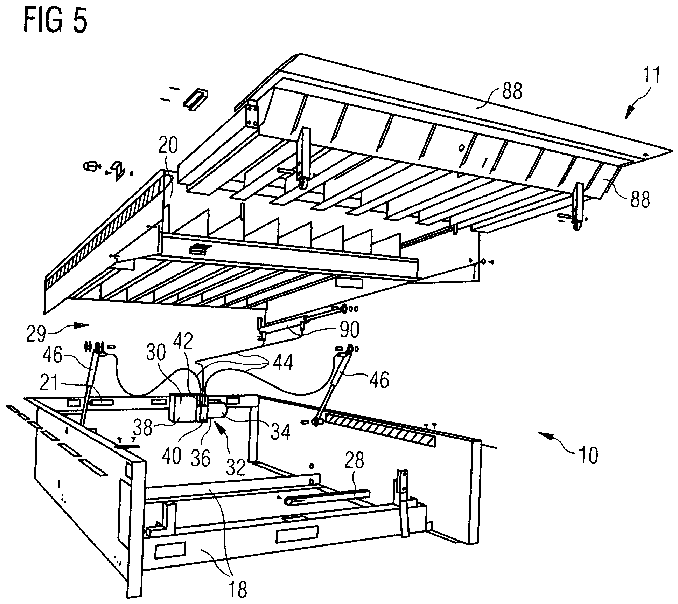

Wie aus den Fig. 4 und 5 ersichtlich, ist die Vorschubladebrücke 86 in vielen Teilen ähnlich wie die Klappkeilladebrücke 12 ausgeführt, wobei jedoch anstelle des durch Verschwenken um die Klappkeilscharnierachse 24 hochklappbaren Klappkeils 22 eine oder mehrere parallel zur Plattform 20 nach vorne und nach hinten verschiebbare Vorschublippe(n) 88 vorgesehen ist bzw. sind. Für entsprechende Teile der Ausführungsformen der Ladebrücken 10 werden die gleichen Bezugszeichen verwendet.

Wie insbesondere aus Fig. 5 ersichtlich, weist die Vorschubladebrücke 86 in der dargestellten Ausführungsform ebenfalls einen Basisrahmen 18, eine Plattform 20, die mittels Hubzylindern 46 angetrieben um eine horizontale Scharnierachse 21 hoch und runter schwenkbar an dem Basisrahmen 18 gelagert ist, und eine Hydraulikeinrichtung 29 mit einer elektrohydraulischen Einheit 30 auf. Die elektrohydraulische Einheit 30 ist eine Druckquelle 32, die mit einem Elektromotor 34 und einer Pumpe 36 zum Liefern von Hydrauliköl aus einem Hydrauliktank 38 versehen ist. Das Hydrauliköl wird über Steuerventile 42, die in einem Ventilblock 40 untergebracht sind, und Schläuche 44 zu den Hubzylindern 46 sowie einem Vorschubzylinder 90 geliefert. Mittels des Vorschubzylinders 90 ist die Vorschublippe 88 relativ zu der Plattform 20 von den Scharnierachsen 21 weg nach vorne bzw. zu den Scharnierachsen 21 hin nach hinten verschiebbar.

Auch bei dem hier dargestellten Beispiel der Vorschubladebrücke 86 ist eine Reparaturstütze 28 vorgesehen.

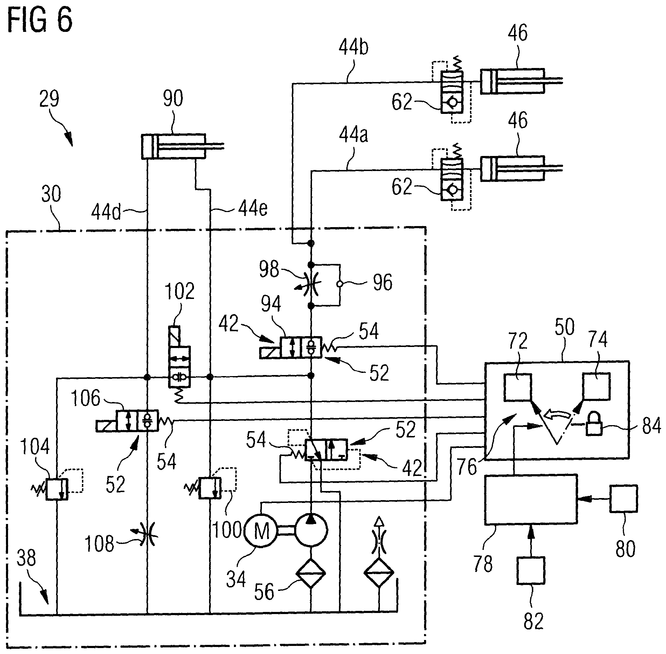

Ein Beispiel für einen hydraulischen Schaltplan für die in Fig. 5 dargestellte Ladebrücke 10 sowie eine mögliche Ansteuerung durch eine Ladebrückensteuerung 50 sind in Fig. 6 wiedergegeben.

Wie in Fig. 6 dargestellt, wird der Motor 34 durch die Ladebrückensteuerung 50 bestromt, um über die Pumpe 36 Hydrauliköl aus dem Hydrauliköltank 38 über einen Saugfilter 56 anzuziehen und auf der Druckseite der Pumpe 36 zu einem Freeflowventil 92 zu leiten. Das Freeflowventil 92 ist ein erstes der Steuerventile 42, welches als Magnetventil 52 mit einer Magnetspule 54 versehen ist, die über die Ladebrückensteuerung 50 mit Strom versorgbar ist. Wird die Magnetspule 54 des Freeflowventils 92 bestromt, so wird Hydraulikdruck zu einer Leitung geleitet, die mit einem Schlauch 44e zum Zurückführen des Vorschubzylinders 90 verbunden ist. Weiter ist diese Leitung über ein weiteres Steuerventil 42 in Form eines ersten 2/2-Ventils 94 verbunden. Das erste 2/2-Ventil 94 ist ebenfalls ein Magnetventil 52 mit Magnetspule 54, das stromlos geschlossen ist. Zum Anheben wird der Hydrauliköldruck über ein Rückschlagventil 96 an einem Drosselventil 98 vorbei zu den Schläuchen 44b, 44a der Hubzylinder 46 geleitet, die wiederum durch eine Schlauchbruchsicherung 62 gesichert sind.

Die Druckseite zwischen den Ventilen 94 und 92 ist durch ein als Hauptdruckventil wirkendes erstes Druckbegrenzungsventil 100 auf einen Hauptdruck begrenzt. Dieser wird an dem Druckbegrenzungsventil 100 z.B. auf einen Wert von ca. 150 bar eingestellt. Diese Druckseite ist weiter über ein zweites 2/2-Ventil 102 an einen Schlauch 44d zum Vorschieben des Vorschubzylinders 90 angeschlossen. Der Druck auf diesem Schlauch 44d ist durch ein zweites Druckbegrenzungsventil 104 auf einen kleineren Wert als der Hauptdruck, beispielsweise auf ca. 100 bar, begrenzt.

Das zweite 2/2-Ventil 102 ist als Steuerventil 42 ebenfalls in Form eines Magnetventils 52 mit Magnetspule 54 ausgebildet. Das zweite 2/2-Ventil 102 ist stromlos geschlossen. Bei geschlossenem ersten Ventil 94 und geöffnetem zweiten 2/2-Ventil 102 stellt sich der gleiche Druck auf den beiden Schläuchen 44d, 44e des Vorschubzylinders 90 ein. Durch einen Unterschied der Druckflächen in dem Vorschubzylinder 90 wird so der Vorschubzylinder 90 ausgefahren. Ein Absenken der Zylinder 90, 46 erfolgt bei geöffnetem ersten und zweiten 2/2-Ventil 94, 102 über ein drittes 2/2-Ventil 106 und ein zum Senken vorgesehenes Drosselventil 108. Das dritte 2/2-Ventil 106 ist als Steuerventil 42 in Form eines Magnetventils 52 mit an die Ladebrückensteuerung 50 angeschlossener Magnetspule 54 ausgebildet.

Die Ladebrückensteuerung 50 ist analog zu der ersten Ausführungsform ausgebildet und weist demnach ebenfalls die Halte- und Betriebsmoduseinrichtung 72, die Energiesparmoduseinrichtung 74, die Modusauswahleinrichtung 76 und die Modusauswahlsperreinrichtung 84 auf. Wird die Modusauswahlsperreinrichtung 84 nicht aktiviert, dann lässt sich über die Modusauswahleinrichtung 76 signalgesteuert abhängig von einem Signal von einer Ruhezustandserfassungseinrichtung 78, welches diese aus der Torsteuerung 80 oder einem Ruhezustandssensor 82 erzeugt, im Ruhezustand der Ladebrücke 10 die Energiesparmoduseinrichtung 74 aktivieren, um so einen Energiesparmodus durchzuführen, in der die Steuerventile 42 geschlossen sind und die Magnetspulen 54 stromlos geschaltet werden. Wird dagegen die Modusauswahlsperreinrichtung 84 aktiviert, so ist nur die Halte- und Betriebsmoduseinrichtung 72 aktiv, so dass die Steuerventile 42 entsprechend bestromt und geschaltet werden, um über die Hubzylinder 46 die Plattform 20 zu bewegen oder schwimmend zu halten.

Bei den Ladebrücken 10 gemäß den Fig. 1 und 4 sind die Ladebrücken 10 innerhalb eines Gebäudeteils der Verladestation 16 so angeordnet, dass in Verladerichtung (siehe Pfeile in Fig. 4) ein Beladen (oder umgekehrt ein Entladen) erfolgen kann; die Plattformen 20 der Ladebrücken 10 liegen aber im Ruhezustand der Ladebrücken auch auf gleichem Niveau wie der restliche Boden dieses Bereichs der Verladestation, so dass auch ein Querverkehr quer zu der Verladerichtung über die Plattformen 20 hinweg möglich ist.

Wie man den Fig. 2 und 5 entnehmen kann, sind normalerweise die Plattformen 20 nicht abgestützt, sondern in ihrer Ruhestellung allein über die Hubzylinder 46 gehalten. Diese Hubzylinder 46 nehmen somit beim Ladeverkehr die Last auf. Gibt es hier größere Belastungen durch beladene Flurförderfahrzeuge oder dergleichen, dann kann dies durch Verformungen zu einem Absenken der Plattform 20 führen. Im Halte- und Betriebsmodus - bei Betrieb der Halte- und Betriebsmoduseinrichtung 72 - sind die Steuerventile 42 geöffnet, so dass die Hubzylinder 46 schwimmend gehalten werden und durch gewissen Druckausgleich solche höheren Lasten aufnehmen können.

Werden dagegen im Energiesparmodus - die Energiesparmoduseinrichtung 74 ist aktiv - die Magnetspulen 54 stromlos geschaltet, dann werden die Steuerventile 52 geschlossen. Belastungen auf die Hubzylinder 46 können aufgrund der Inkompressibilität des flüssigen Hydrauliköls nicht aufgefangen werden. Würde demnach in der in den Fig. 1 und 4 gezeigten Situation ein Querverkehr mit hohen Transportgewichten erfolgen, dann könnten die Plattformen 20, nachdem sie nicht über die Hydraulikzylinder 46 ausweichen können, sehr hoch belastet werden und könnten beschädigt werden.

Bei einem solchen Fall eines Energiesparmodus bei möglichem Querverkehr der Fig. 1 und 4 müssten somit größere Hubzylinder 46 und/oder aufwändigere Konstruktionen der Ladebrücken 10 installiert werden.

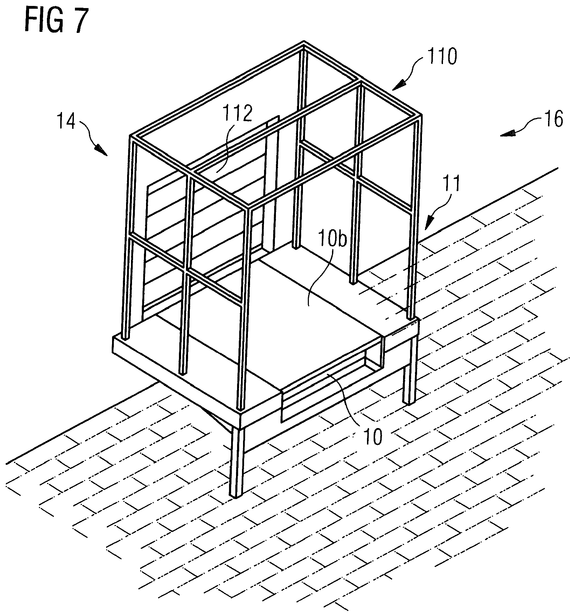

Es gibt aber auch eine Ladebrückenanordnung 11 der in Fig. 7 gezeigten Art, wo über die Ladebrücke 10 hinweg kein Querverkehr möglich ist.

Fig. 7 zeigt eine Verladestelle 14 einer Verladestation 16 mit einer Ladebrücke 10, die in einer Vorsatzschleuse 110 vor einer mit einem Tor 112 verschlossenen Verladeöffnung 114 angeordnet ist. Bei einer solchen Vorsatzschleuse 110 ist kein Querverkehr über die Ladebrücke 10 hinweg möglich.

Es gibt auch Verladestationen 16, wo generell nur mit geringeren Transportgewichten gerechnet werden muss, so dass das Problem eines Querverkehrs über eine im Energiesparmodus betriebene Ladebrücke 10 hinweg nicht auftritt, da die Ladebrücken 10 nicht über ihre Belastungsgrenze hinweg belastet würden.

Um Verladestationen 16 mit möglichst mit geringem Aufwand konstruierten und entsprechend kostengünstigeren Ladebrücken 10 mit möglichst weit im Energiesparmodus betreibbaren Ladebrückenanordnungen 11 versehen zu können, wird bei der hier vorgeschlagenen Ladebrückensteuerung 50 die Modusauswahlsperreinrichtung 84 vorgeschlagen.

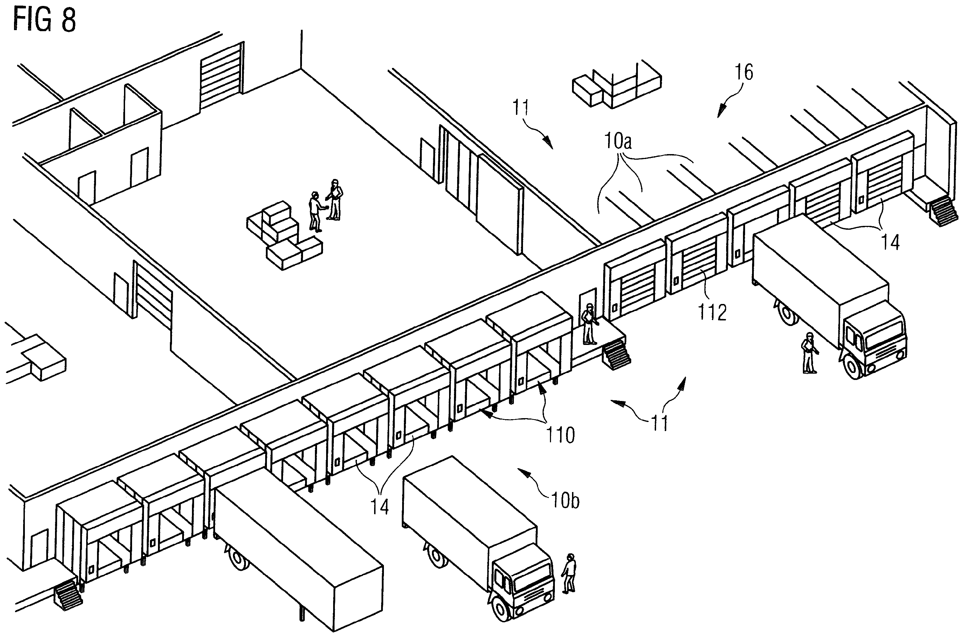

Fig. 8 zeigt ein Beispiel für eine Verladestation 16 mit einer Ladebrückenanordnung 11 mit mehreren Ladebrücken 10, wobei bei einigen Ladebrücken 10a Querverkehr möglich ist und bei einer anderen Gruppe von Ladebrücken 10b (z.B. angedeutet durch Verladestellen 14 mit Vorsatzschleusen 110) kein Querverkehr möglich ist.

Beim Einrichten dieser Ladebrückenanordnung 11 werden die Ladebrückensteuerungen 50 der ersten Gruppe von Ladebrücken 10a mit möglichem Querverkehr derart eingestellt, dass eine Anwahl des Energiesparmodus nicht möglich ist. Dies kann insbesondere durch die Aktivierung der Modusauswahlsperreinrichtung 84 (d.h. Deaktivieren der Energiesparmoduseinrichtung 74) erfolgen. Bei der zweiten Gruppe von Ladebrücken 10b, wo kein Querverkehr möglich ist, wird ein automatisches Auswählen des Energiesparmodus ermöglicht. Bei den entsprechenden Ladebrückensteuerungen wird z.B. die Modusauswahlsperreinrichtung 84 beim Einrichten der Verladestation 16 für diese Gruppe von Ladebrücken 10b inaktiv geschaltet.

Die Ladebrückensteuerung 50 kann insbesondere mit einer Torsteuerung 80 des Tors 112 gekoppelt werden, wie dies in Fig. 9 angedeutet ist. Die Torsteuerung 80 des Tors 112 erfasst, ob das Tor 112 die obere Endlage erreicht hat, und aktiviert erst dann den möglichen Betrieb der Ladebrücke 10. Ist die Modusauswahleinrichtung 76 aktiv, wird beispielsweise bei Erfassen der Torstellung "TOR AUF" der Energiesparmodus ausgeschaltet und der Halte- und Betriebsmodus 72 eingeschaltet.

Wird das Tor wieder geschlossen, dann kann z.B. bei Verlassen der Torposition "TOR AUF" oder z.B. bei Erreichen der Torposition "TOR ZU" eine entsprechende Meldung an die Modusauswahleinrichtung 76 erfolgen, um so erneut den Energiesparmodus zu aktivieren. Alternativ können auch die Ruhezustandssensoren 82 vorgesehen sein, die erfassen, wenn sich die Ladebrücke 10 wieder in ihrem Ruhezustand befindet, um als Signal für die Modusauswahleinrichtung 76 zum Anwählen des Energiesparmodus zu dienen. Als weitere Alternative könnte auch ein Rückholbefehl (Autoreturn) der Ladebrücke 10, auf den hin die Ladebrücke 10 in ihren Ruhezustand zurückkehrt, zum Erzeugen des Ruhezustandssignals herangezogen werden. Es empfiehlt sich dann, nach Erfassen einer Betätigung der Rückholfunktion eine Sicherheitspufferzeit verstreichen zu lassen, bevor der Energiesparmodus aktiviert wird.

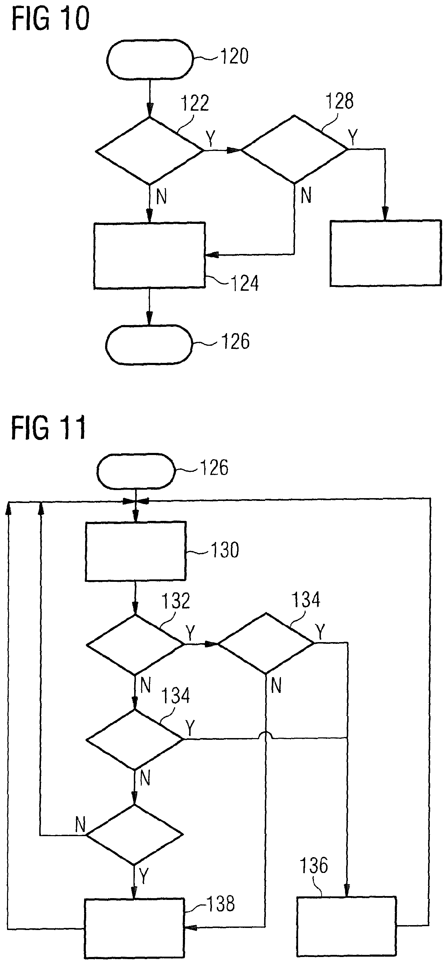

Fig. 10 zeigt einen ersten Teil eines Flussdiagramms für ein Verfahren zum Einrichten und Betreiben der Ladebrückenanordnung 11.

Beim Einrichten wird nach einem Start des Einrichtmenüs 120 im Schritt 122 gefragt, ob Querverkehr möglich ist. Ist dies nicht der Fall, wird bei 124 die Modusauswahleinrichtung 76 aktiviert bzw. die Modusauswahlsperreinrichtung 84 deaktiviert. Nach diesem Schritt 124 ist ein Betrieb 126 mit automatischer Auswahl des Energiesparmodus möglich.

Falls jedoch bei 122 festgestellt wird, dass ein Querverkehr möglich ist, wird bei 128 abgefragt, ob Querverkehr mit Belastungen oberhalb einer für die jeweilige Ladebrücke 10 vorgegebenen Belastungsgrenze möglich oder zu erwarten ist. Ist dies nicht der Fall, kann wieder bei Schritt 124 die Modusauswahleinrichtung 76 aktiviert bzw. die Modusauswahlsperreinrichtung 84 deaktiviert werden, so dass der Betrieb mit automatischer Anwahl des Energiesparmodus 126 möglich ist.

Ist jedoch ein Querverkehr mit Belastungen oberhalb der Belastungsgrenze möglich oder zu erwarten, dann wird in Schritt 125 die Modusauswahleinrichtung 76 deaktiviert bzw. die Modusauswahlsperreinrichtung 84 aktiviert, so dass ein Anwählen eines Energiesparmodus für diese Ladebrücke 10, 10a nicht möglich ist. Ist die Ladebrückensteuerung 50 aktiviert, was zum Betrieb der Verladestation 16 der Fall ist, dann wird stets der Halte- und Betriebsmodus durchgeführt. Die Magnetspulen 54 werden bestromt, so dass auch bei im Ruhezustand befindlicher Plattform 20 die Hubzylinder 46 im Schwimmmodus betrieben werden. Bei Belastungen oberhalb einer bestimmten Belastungsschwelle können diese Belastungen über die geöffneten Steuerventile 42 hydraulisch abgeleitet werden.

Damit können auch bei Querverkehr Ladebrücken 10, 10a eingesetzt werden, die eine relativ geringe Belastungsgrenze haben und somit mit relativ gering dimensionierten Hubzylindern und anderen Komponenten der Ladebrücke 10, 10a auskommt.

In Fig. 11 ist noch ein weiterer Teil des Flussdiagramms des Verfahrens zum Einrichten und Betreiben der Ladebrückenanordnung 11 wiedergegeben, welches den Betrieb 126 mit automatischer Anwahl des Energiesparmodus schematisch darstellt.

Der Betrieb wird beispielsweise an der in Fig. 9 dargestellten Ladebrückenanordnung 11 durchgeführt. Bei dem in Fig. 11 dargestellten Ausführungsbeispiel des Betriebsverfahrens erfasst die Ruhezustandserfassungseinrichtung 78 den Ruhezustand anhand von Torpositionen, die z.B. über die Torsteuerung 80 geliefert werden. Demnach wird beim Schritt 130 die Torposition abgefragt. Im Fall bei 132, dass die Ladebrückensteuerung 50 nur die Torposition "TOR AUF" - Öffnungsendstellung - des Tors 112 verarbeiten kann, wird bei 134 abgefragt, ob diese

Öffnungsendstellung anliegt. Falls die Öffnungsendstellung anliegt - Schritt 134 -, wird die Modusauswahleinrichtung 76 zum Aktivieren der Halte- und Betriebsmoduseinrichtung 72 angesteuert; bei Schritt 136 wird demnach der Halte- und Betriebsmodus durchgeführt. Wird dagegen bei Schritt 134 festgestellt, dass die Öffnungsendstellung nicht anliegt, dann wird die Modusauswahleinrichtung 76 zum Aktivieren der Energiesparmoduseinrichtung 74 angesteuert. Mit anderen Worten wird bei 138 der Energiesparmodus angewählt.

Kann jedoch die Ladebrückensteuerung nicht nur die Öffnungsendstellung, sondern auch die Schließendstellung verarbeiten, dann wird auch hier der Schritt 134 der Abfragen der Öffnungsendstellung durchgeführt. Liegt die Öffnungsendstellung an, wird im Schritt 136 der Halte- und Betriebsmodus ausgewählt. Liegt keine Öffnungsendstellung an, wird im Schritt 140 abgefragt, ob die Schließendstellung (TOR ZU) anliegt. Ist dies der Fall, dann wird im Schritt 138 der Energiesparmodus ausgewählt.

Wie oben bereits erwähnt, kann der Ruhezustand der Ladebrücke anstelle durch Abfragen von Torpositionen auch auf andere vielfältige Weise erfasst werden.

### Bezugszeichenliste:

- 10: Ladebrücke
- 10a: Ladebrücke mit Querverkehr
- 10b: Ladebrücke ohne Querverkehr
- 11: Ladebrückenanordnung
- 12: Klappkeilladebrücke
- 14: Verladestelle
- 16: Verladestation
- 18: Basisrahmen
- 20: Plattform
- 21: Scharnierachse
- 22: Klappkeil
- 24: Klappkeilscharnierachse
- 26: Fußschutzplatte
- 28: Reparaturstütze
- 29: Elektrohydraulikeinrichtung
- 30: Elektrohydraulische Einheit
- 32: Druckquelle
- 34: Elektromotor
- 36: Pumpe
- 38: Hydrauliköltank
- 40: Ventilblock
- 42: Steuerventil
- 44: Schläuche
- 44a: Schlauch für Hubzylinder
- 44b: Schlauch für Hubzylinder
- 44c: Schlauch für Klappkeilzylinder
- 44d: Schlauch für Vorschubzylinder AN
- 44e: Schlauch für Vorschubzylinder AUS
- 46: Hubzylinder
- 48: Klappkeilzylinder
- 50: Ladebrückensteuerung
- 52: Magnetventil
- 54: Magnetspule
- 56: Saugfilter
- 58: Druckbegrenzungsventil
- 60: Freeflowventil
- 62: Schlauchbruchsicherung
- 64: Drosselventil
- 66: elektrisches 2/2-Ventil
- 68: Wechselventil
- 70: hydraulisches 2/2-Ventil
- 72: Halte- und Betriebsmoduseinrichtung
- 74: Energiesparmoduseinrichtung
- 76: Modusauswahleinrichtung
- 78: Ruhezustandserfassungseinrichtung
- 80: Torsteuerung
- 82: Ruhezustandssensor
- 84: Modusauswahlsperreinrichtung
- 86: Vorschubladebrücke
- 88: Vorschublippe
- 90: Vorschubzylinder
- 92: Freeflowventil
- 94: erstes 2/2-Ventil
- 96: Rückschlagventil
- 98: Drosselventil
- 100: erstes Druckbegrenzungsventil
- 102: zweites 2/2-Ventil
- 104: zweites Druckbegrenzungsventil
- 106: drittes 2/2-Ventil
- 108: Drosselventil (Senken)
- 110: Vorsatzschleuse
- 112: Tor
- 114: Verladeöffnung
- 120: Start Einrichtmenü
- 122: Querverkehr möglich?
- 124: Modusauswahleinrichtung aktivieren/Modusauswahlsperreinrichtung deaktivieren
- 125: Modusauswahleinrichtung deaktivieren/Modusauswahlsperreinrichtung aktivieren
- 126: Betrieb mit automatischer Anwahl des Energiesparmodus
- 128: Querverkehr mit Belastungen oberhalb der für die zugeordnete Ladebrücke Belastungsgrenze möglich oder zu erwarten?
- 130: Torposition abfragen
- 132: Kann Ladebrückensteuerung nur Öffnungsendstellung verarbeiten?
- 134: Liegt Öffnungsendstellung (TOR AUF) an?
- 136: Halte- und Betriebsmodus auswählen
- 138: Energiesparmodus auswählen
- 140: Liegt Schließendstellung (TOR ZU) an?
- N: Nein
- Y: Ja

## Patentansprüche

1. Verfahren zum Einrichten und Betreiben einer Ladebrückenanordnung (11), die wenigstens eine Ladebrücke (10) an einer Verladestation (16), wenigstens einen Hubzylinder (46), eine Druckquelle (32) und ein Steuerventil (42) für den Hubzylinder (46) zum Anheben der Ladebrücke (10) und eine Ladebrückensteuerung (50) zum Ansteuern des Steuerventils (42) aufweist, **dadurch gekennzeichnet, dass** zum Einrichten der Ladebrückenanordnung (11) beurteilt wird, ob an der Verladestation (16) ein Querlastverkehr mit einer Belastung oberhalb eines Belastungsschwellwerts über die Ladebrücke (10) möglich ist oder nicht,
wobei die Ladebrückensteuerung (50)
a) im Fall, dass der Querlastverkehr mit einer Belastung oberhalb des Belastungsschwellwerts möglich ist, derart eingerichtet wird, dass das Steuerventil (42) in einem Ladezustand und in einem Ruhezustand der Ladebrücke (10) zum Halten und/oder Bewegen der Ladebrücke (10) angeschaltet offen gehalten wird, und
b) im Fall, dass kein Querlastverkehr möglich ist oder nur Querlastverkehr mit einer Belastung unterhalb des Belastungsschwellwerts möglich ist, zum wahlweisen Ausführen eines Energiesparmodus, in dem das Steuerventil (42) stromlos geschlossen wird, und eines Halte- und Betriebsmodus eingerichtet wird, in dem das Steuerventil (42) zum Anheben oder Halten der Ladebrücke (10) über den Hubzylinder (46) bestromt geöffnet ist,
wobei im Betrieb im Fall b) wenigstens ein Parameter erfasst wird, der einen Ruhezustand oder einen Ladezustand anzeigt und abhängig davon im Ruhezustand der Energiesparmodus und im Ladezustand der Halte- und Betriebsmodus angesteuert wird.

2. Verfahren nach Anspruch 1,
**dadurch gekennzeichnet,**
**dass** als Parameter, der einen Ruhezustand oder einen Ladezustand anzeigt, eine Stellung, insbesondere eine Endstellung, eines der Ladebrücke (10) zugeordneten Tores (112) der Verladestation (16) erfasst wird.

3. Verfahren nach Anspruch 2,
**dadurch gekennzeichnet,**
**dass** ein Umschalten vom Energiesparmodus in den Halte- und Betriebsmodus erfolgt, wenn erfasst wird, dass sich das Tor (112) in einer Öffnungsendlage befindet.

4. Verfahren nach Anspruch 2 oder 3,
**dadurch gekennzeichnet,**
**dass** ein Umschalten vom Halte- und Betriebsmodus in den Energiesparmodus erfolgt, wenn erfasst wird,
c) dass sich das Tor (112) nicht in der Öffnungsendlage befindet oder die Öffnungsendlage verlässt oder
d) dass sich das Tor (112) in der Schließendlage befindet oder diese erreicht.

5. Verfahren nach einem der voranstehenden Ansprüche,
**dadurch gekennzeichnet,**
**dass** der Belastungsschwellwert für die Entscheidung, ob ein Energiesparmodus erlaubt ist oder nicht, abhängig von der maximal zulässigen Belastung der sich in Ruhestellung befindlichen Ladebrücke (10) ausgewählt wird.

6. Ladebrückenanordnung (11) zur Verwendung in einem Verfahren nach einem der Ansprüche 1 bis 5, mit:
wenigstens einer Ladebrücke (10),
wenigstens einem Hubzylinder (46) zum Anheben der Ladebrücke (10),
wenigstens einem Steuerventil (42) und einer Druckquelle (32) zum Antreiben des Hubzylinders (46) und
einer Ladebrückensteuerung (50) zum Steuern des Steuerventils (42), wobei die Ladebrückensteuerung (50) dazu ausgebildet ist, das wenigstens eine Steuerventil (42) wahlweise in einem Energiesparmodus stromlos geschlossen zu halten oder in einem Halte- und Betriebsmodus bestromt geöffnet zu halten,
und wobei die Ladebrückensteuerung (50) eine Energiesparmodus-Sperreinrichtung zum generellen Verhindern eines Einschaltens des Energiesparmodus beim Einrichten der Ladebrückenanordnung (11) aufweist.

7. Ladebrückenanordnung (11) nach Anspruch 6,
**dadurch gekennzeichnet,**
**dass** die Ladebrückensteuerung zum Anschließen an eine Torpositionserfassungseinrichtung ausgebildet ist, um eine Steuerung der Ladebrücke abhängig von einer Torposition durchzuführen.

8. Ladebrückenanordnung (11) nach Anspruch 7,
**dadurch gekennzeichnet,**
**dass** eine Torpositionssteuerungseinstelleinrichtung vorgesehen ist, um wahlweise einen Steuerungsbetrieb abhängig von einer Torposition vorzusehen oder nicht.

9. Verladestation (16) mit einer Ladebrückenanordnung (11) nach einem der Ansprüche 6 bis 8, **dadurch gekennzeichnet,**
**dass** die Ladebrückensteuerung (50) derart ausgebildet oder eingerichtet ist, dass bei einer Ladebrücke (10b), bei der Querlastverkehr mit Belastungen oberhalb einer vorgegebenen Belastungsschwelle nicht möglich und/oder vorgesehen ist, in einer Ruhestellung der Ladebrücke (10b) der Energiesparmodus anwählbar ist und bei einer Ladebrücke (10a), bei der Querlastverkehr mit einer Belastung oberhalb einer vorgegebenen Belastungsschwelle möglich und/oder vorgesehen ist, kein Energiesparmodus anwählbar ist.

## Claims

1. Method for setting up and operating a loading ramp arrangement (11) that comprises at least one loading ramp (10) at a loading station (16), at least one lifting cylinder (46), a pressure source (32), and a control valve (42) for said lifting cylinder (46) to lift said loading ramp (10), and a loading ramp control unit (50) for controlling said control valve (42), **characterized in that**
for setting up said loading ramp arrangement (11), a determination is made whether or not cross-load traffic with a load above a load threshold value is possible at said loading station (16) via said loading ramp (10), wherein said loading ramp control unit (50),
a) is set in such a manner that if cross-load traffic with a load above said load threshold value is possible, said control valve (42) is kept open when switched on for holding and/or moving said loading ramp (10) in a loading state and in a resting state of said loading ramp (10),
b) and is set in such a manner that if no cross-load traffic is possible or is only possible with a load below said load threshold value, it will selectively enter a power-saving mode in which said control valve (42) is normally closed, and a hold and operating mode in which said control valve (42) is normally open, for lifting or holding said loading ramp (10) via said lifting cylinder (46),
wherein during the operation in the case of b), at least one parameter is obtained indicating a resting state or a loading state and wherein the power-saving mode is selected in the resting state and the hold and operating mode is selected in the loading state, depending on said parameter.

2. Method according to claim 1,
**characterized in that** as a parameter indicating a resting state or a loading state there is detected a position, especially an end position, of a door (112) of loading station (16) assigned to said loading ramp (10).

3. Method according to claim 2,
**characterized in that** switching from the power-saving mode to the hold and operating mode is performed if it is detected that the door (112) is in an opening end position.

4. Method according to claim 2 or 3,
**characterized in that** switching form the hold and operating mode to the power-saving mode is performed if it is detected that
c) the door (112) is not in the opening end position or leaves the opening end position or
d) the door (112) is in or reaches the opening end position.

5. Method according to any one of the preceding claims,
**characterized in that** the load threshold value for the decision whether or not a power-saving mode is permitted is selected depending on the permissible load of the loading ramp (10) in its rest position.

6. Loading ramp arrangement (11) for use in a method according to any one of the claims 1 to 5, comprising:
at least one loading ramp (10),
at least one lifting cylinder (46) for lifting said loading ramp (10),
at least one control valve (42), and a pressure source (32) for driving said lifting cylinder (46), and
a loading ramp control unit (50) for controlling said control valve (42),
wherein said loading ramp control unit (50) is configured for selectively keeping the at least one control valve (42) normally closed in a power-saving mode or open in a hold and operating mode when energized, and wherein said loading ramp control unit (50) includes a power-saving mode locking device for generally preventing said power-saving mode from being activated at the time said loading ramp arrangement (11) is set up.

7. Loading ramp arrangement (11) according to claim 6,
**characterized in that** said loading ramp control unit is constructed for being connected to a door position detection device in order to carry out a control operation of the loading ramp depending on the door position.

8. Loading ramp arrangement (11) according to claim 7,
**characterized in that** a door position control setting device is provided for selectively providing or not a control operation depending on a door position.

9. Loading station (16), comprising a loading ramp arrangement (11) according to any one of the claims 6 to 8, **characterized in that** said loading ramp controller (50) is constructed and set in such a manner that in a loading ramp (10b) in which a cross-load traffic with loads above a predetermined load threshold value is not possible and/or provided, the power-saving mode can be selected in the rest position of the loading ramp (10b), and in a loading ramp (10a) in which said cross-load traffic with a load above a predetermined load threshold value is possible and/or provided, no power-saving mode can be selected.

## Revendications

1. Procédé permettant d'installer et de faire fonctionner un dispositif de pont de chargement (11) qui comporte au moins un pont de chargement (10) équipant un poste de chargement (16), au moins un cylindre de levage (46), une source de pression (32) et une soupape de commande (42) du cylindre de levage (46) permettant de lever le pont de chargement (10), ainsi qu'une commande du pont de chargement (50) permettant de commander la soupape de commande (42),
**caractérisé en ce que**
pour permettre d'installer le dispositif de pont de chargement (11), on évalue si, dans le poste de chargement (16), un trafic poids lourds transversal avec une charge supérieure à une valeur de seuil de la charge est ou non possible sur le pont de chargement (10),
la commande de pont de chargement (50) étant :
a) dans le cas dans lequel le trafic poids lourds transversal avec une charge supérieure à la valeur de seuil de la charge est possible, agencée de sorte que la soupape de commande (42) soit maintenue ouverte branchée dans un état de chargement et dans un état de repos du pont de chargement (10) pour permettre d'arrêter et/ou de déplacer ce pont de chargement (10),
b) dans le cas dans lequel aucun trafic poids lourds transversal n'est possible ou seul un trafic poids lourds transversal avec une charge inférieure à la valeur de seuil de la charge, est possible agencée, pour permettre de mettre en oeuvre sélectivement un mode d'économie d'énergie dans lequel la soupape de commande (42) est fermée sans être alimentée en courant et un mode d'arrêt et de fonctionnement, dans lequel la soupape de commande (42) est maintenue ouverte en étant alimentée en courant pour permettre de lever ou d'arrêter le pont de chargement (10) par l'intermédiaire d'un cylindre de levage (46),
lors du fonctionnement selon le cas b), au moins un paramètre qui indique un état de repos ou un état de chargement étant détecté, et, en fonction de ce paramètre, dans l'état de repos le mode d'économie d'énergie étant commandé et dans l'état de chargement le mode d'arrêt et de fonctionnement étant commandé.

2. Procédé conforme à la revendication 1,
**caractérisé en ce qu'**
en tant que paramètre indiquant un état de repos ou un état de chargement, on détecte la position, en particulier la position de fin de course d'un portail (112) du poste de chargement (16) associé au pont de chargement (10).

3. Procédé conforme à la revendication 2,
**caractérisé en ce que**
l'on effectue une commutation du mode d'économie d'énergie dans le mode d'arrêt et de fonctionnement lorsqu'il est détecté que le portail (112) se trouve dans une position de fin de course d'ouverture.

4. Procédé conforme à la revendication 2 ou 3,
**caractérisé en ce que**
l'on effectue une commutation du mode d'arrêt et de fonctionnement dans le mode d'économie d'énergie lorsqu'il est détecté :
c) que le portail (112) ne se trouve pas dans la position de fin de course d'ouverture ou que la position de fin de course d'ouverture a été quittée, ou
d) que le portail (112) se trouve dans la position de fin de course de fermeture ou atteint celle-ci.

5. Procédé conforme à l'une des revendications précédentes,
**caractérisé en ce que**
la valeur de seuil de la charge permettant de décider si un mode d'économie d'énergie est autorisé ou non est sélectionnée en fonction de la charge maximum admissible du pont de chargement (10) se trouvant dans la position de repos.

6. Dispositif de pont de chargement (11) destiné à être utilisé lors de la mise en oeuvre d'un procédé conforme à l'une des revendications 1 à 5 comprenant :
- au moins un pont de chargement (10),
- au moins un cylindre de levage (46) permettant de lever le pont de chargement (10),
- au moins une soupape de commande (42) et une source de pression (32) permettant d'actionner le cylindre de levage (46), et
- une commande de pont de chargement (50) permettant de commander la soupape de commande (42), la commande du pont de chargement (50) étant réalisée pour permettre de maintenir sélectivement la soupape de commande (42) dans un mode d'économie d'énergie dans lequel elle est fermée et non alimentée en courant ou dans un mode d'arrêt et de fonctionnement dans lequel elle est ouverte et alimentée en courant, et
- la commande du pont de chargement (50) comprenant un dispositif de blocage du mode d'économie d'énergie pour empêcher de manière générale un branchement du mode d'économie d'énergie lors de l'installation du dispositif de pont de chargement (11).

7. Dispositif de pont de chargement (11) conforme à la revendication 6,
**caractérisé en ce que**
la commande du pont de chargement est réalisée pour être connectée à un dispositif de détection de la position d'un portail pour effectuer la commande du pont de chargement en fonction de la position de ce portail.

8. Dispositif de chargement (11) conforme à la revendication 7,
**caractérisé en ce qu'**
il est prévu un dispositif de réglage de la commande de la position du portail pour pouvoir sélectivement prévoir ou non un fonctionnement de commande en fonction de la position de ce portail.

9. Poste de chargement (16) comprenant un dispositif de pont de chargement (11) conforme à l'une des revendications 6 à 8,
**caractérisé en ce que**
la commande du pont de chargement (50) est réalisée ou installée de sorte que, dans le cas d'un pont de chargement (10b) pour lequel un trafic poids lourds transversal avec des charges supérieures à un seuil de charge prédéfini n'est pas possible et/ou pas prévu, dans une position de repos du pont de chargement (10b), le mode d'économie d'énergie puisse être sélectionné, et, que dans le cas d'un pont de chargement (10a) pour lequel un trafic poids lourds transversal avec une charge supérieure à un seuil de charge prédéfinie est possible et/ou prévu, aucun mode d'économie d'énergie ne puisse être sélectionné.
